# FASCICULE DE BREVET EUROPEEN

(11) **EP 0 648 147 B1**
(45) Date de publication et mention de la délivrance du brevet: **30.10.1996**
(21) Numéro de dépôt: 93914807.8
(22) Date de dépôt: 02.07.1993
(51) Int. Cl.: B01D 61/56, B01D 35/06, C02F 11/12

(54) **DISPOSITIF DE DESHYDRATATION DE PRODUITS CHARGES PAR ELECTRO-OSMOSE AINSI QUE LES PROCEDES DE FONCTIONNEMENT**
VORRICHTUNG ZUR ENTWÄSSERUNG VON GELADENEN PRODUKTEN DURCH ELEKTROOSMOSE UND VERFAHREN ZUM BETREIBEN DERSELBEN
DEVICE FOR ELECTROOSMOTICALLY DEWATERING LOADED MATERIALS, AND RELATED OPERATING METHODS

(30) Priorité: 03.07.1992 FR 9208266
(43) Date de publication de la demande: 19.04.1995
(73) Titulaire: ELMETHERM, F-87310 Saint Laurent sur Gorre (FR); ELECTRICITE DE FRANCE Service National, F-75008 Paris (FR)
(72) Inventeur: CHARLOT, Alain, F-29110 Concarneau (FR); DAMIEN, Alain, F-95150 Taverny (FR); LENFANT, Jean-Pierre, F-87600 Rochechouart (FR)
(74) Mandataire: Polus, Camille
(86) Numéro de dépôt international: FR9300682
(87) Numéro de publication internationale: WO9401208

(56) Documents cités:
- EP-A- 0 534 861
- DE-A- 3 901 070
- DE-C- 317 403
- DE-C- 476 144
- US-A- 4 367 132
- PATENT ABSTRACTS OF JAPAN vol. 11, no. 176 (C-426)5 Juin 1987

## Description

La présente invention a pour objet un dispositif de déshydratation d'une suspension de fines particules solides dans l'eau et de boues à structure colloïdale par électro-osmose ainsi que les procédés de fonctionnement.

On connaît, notamment par la demande de brevet EP-A-0 534 861, appartenant à l'état de la technique visé à l'article 54(3) CBE, publiée le 31 mars 1993, aux noms des demandeurs, une cellule et un appareil industriel de déshydratation par électro-osmose.

La cellule de cet appareil de déshydratation par électro-osmose comprend une cuve qui contient le produit et qui est ouverte en partie supérieure, deux des côtés en vis à vis de la cellule constituant des électrodes, plus particulièrement une anode et une cathode, en vue de séparer l'eau des matières solides d'une suspension contenue dans cette cellule par le phénomène d'électro-osmose.

Dans ce but, l'anode et la cathode sont des parois poreuses de façon à permettre l'évacuation des gaz résultants de la dissociation de l'eau d'une part, de l'eau d'autre part, tandis que les produits solides restent sous forme de gâteau plaqué sur la cathode et éventuellement sur l'anode.

Seuls les produits sous forme d'une suspension de particules solides dans un liquide et dont les particules solides présentent un potentiel électro-cinétique non nul par rapport au liquide peuvent être traités.

Durant le fonctionnement, il convient de garder constant le niveau dans la cuve en rapprochant les électrodes l'une de l'autre et dans ce but il est prévu une cathode mobile qui se rapproche de l'anode fixe afin que le niveau dans la cuve reste constant au fur et à mesure de l'extraction de l'eau par le phénomène d'électro-osmose.

Dans ce but, il est prévu un asservissement comprenant des moyens moteurs de déplacement de la cathode et des moyens de mesure en continu du niveau de produit dans la cuve.

L'eau est donc récupérée par écoulement gravitaire tandis que la matière solide s'accumule sous forme de gâteau sur la face humide de la cathode.

A la fin de l'opération, la cathode est reculée, le gâteau tombe partiellement par gravité et il est prévu des moyens complémentaires de décollement de ce gâteau au moyen d'air comprimé injecté à travers une multitude de trous ménagés à travers la face de la cathode, ce qui permet de décoller le reste du gâteau.

Dans cette même demande de brevet, il est prévu un appareil industriel comprenant plusieurs cellules juxtaposées telles qu'elles viennent d'être décrites. Cet appareil consiste à mettre en commun les moyens de déplacement et à juxtaposer des cellules les unes à côté des autres, avec éventuellement la possibilité d'avoir des électrodes communes pour deux bacs voisins.

A l'usage, il est apparu que cet appareil peut être perfectionné, notamment son rendement, et c'est ainsi qu'on s'est aperçu qu'à la cathode, le gâteau en formation crée une couche limite qui tend à réduire le rendement, plus particulièrement lorsque la boue à déshydrater contient des graisses animales, cette perte de rendement allant en augmentant au fur et à mesure du fonctionnement.

D'une part, les moyens de décollement par air comprimé du gâteau de la cathode ne donnent pas entière satisfaction car ils ne sont mis en service qu'après arrêt du système. De plus en fonction des produits, il se trouve que le nettoyage de la cathode reste incomplet.

D'autre part, il n'est prévu aucun moyen de récupération et de transfert du gâteau après décollement, ce qui diminue la fréquence des cycles de fonctionnement.

Les utilisateurs ont de plus des exigences complémentaires, notamment en vue de traiter des produits très liquides à faible taux de matière en suspension, c'est-à-dire ayant une faible siccité.

Or l'appareil industriel décrit ci-avant ne peut fonctionner qu'en cycle discontinu et pour ce type de produits à faible taux de matière en suspension il se trouve que le volume traité par cycle est important, mais la quantité de matière solide récupérée à chaque cycle est faible.

JP-A-62 001 427 décrit un dispositif de déshydratation de produits chargés par électro-osmose, du type comprenant une cuve délimitée par un fond, deux parois longitudinales et deux parois d'extrémité, deux électrodes en vis à vis délimitant les deux parois longitudinales de la cuve, des moyens pour conserver une hauteur constante de liquide dans la cuve, et des moyens de déplacement en translation sensiblement verticale du fond par rapport aux électrodes entre une position haute dans laquelle le fond coopère en contact étanche avec les électrodes et une position basse dans laquelle le fond est écarté de ces électrodes.

DE-C-317 403 décrit un procédé de déshydratation par électro-osmose, d'un produit constitué par une suspension de particules solides dans un liquide.

Les conditions de fonctionnement et les besoins des utilisateurs évoluant, la présente invention a pour but de proposer un dispositif de déshydratation qui vise à améliorer les performances de la déshydratation par électro-osmose en améliorant. notamment le rendement, en permettant de traiter des gammes de produits très étendues, en automatisant la récupération, dont le volume de cuve peut être très important, qui ne comprend qu'une cellule unique, tout en étant modulaire.

A cet effet, l'invention a pour objet un dispositif de déshydratation de produits chargés par électro-osmose, du type précité, dans lequel le fond comporte un convoyeur muni à ses extrémités de moyens sélectifs de récupération des produits obtenus, les parois d'extrémité sont délimitées par des portes étanches et le dispositif comprend de plus des moyens de décollement en continu des produits secs accumulés sur les électrodes. Les électrodes forment l'une une cathode et l'autre une anode.

Suivant d' autres caractéristiques de l'invention:
- le convoyeur comporte une bande de transport inclinée avec une ligne de pente telle que le point bas est en amont du sens de défilement,
- le convoyeur comporte une bande de transport supportée par un châssis statique comportant un film étanche tendu sur une matrice en matériau déformable élastiquement de façon à assurer un plaquage étanche de ladite bande de transport contre les électrodes lorsque le fond est en position haute,
- la bande de transport en position haute du fond est un peu plus haute que le chant inférieur des électrodes de façon à assurer un contact glissant étanche entre cette bande de transport et les électrodes,
- la bande de transport comprend deux guides latéraux en saillie de façon à assurer un maintien en position de la bande dans des rails de guidage ménagés sur le châssis ainsi qu'un bon écoulement des liquides,
- le dispositif comprend des moyens sélectifs d'évacuation et de récupération des produits séparés par électro-osmose,
- les moyens de décollement en continu comprennent un racleur monté sur un chariot mobile en translation horizontale parallèlement à l'électrode concernée,
- le racleur est mobile en translation verticale par rapport au chariot dans un fourreau afin d'assurer son auto-nettoyage,
- les moyens pour conserver une hauteur constante de liquide comprennent des moyens de remplissage de la cuve au fur et à mesure que l'eau s'écoule de cette cuve, ou bien, les moyens pour conserver une hauteur constante de liquide comprennent des moyens d'asservissement des déplacements d'une des électrodes par rapport à l'autre en fonction du niveau dans la cuve.

L'invention a également pour objet un procédé de fonctionnement semi-continu d'un dispositif tel que défini ci-dessus, comprend les étapes suivantes:
- mise en place des électrodes, des portes et du fond de manière que la cuve soit étanche, l'écartement anode-cathode étant réglé à une valeur correspondant au rendement maximal de séparation par électro-osmose pour le produit chargé à traiter,
- remplissage de la cuve avec du produit à traiter,
- mise sous tension des électrodes,
- récupération par écoulement gravitaire de l'eau retirée par électro-osmose et maintien du niveau de produit à traiter dans la cuve par remplissage en continu de cette cuve,
- décollement en continu du produit sur l'électrode concernée afin d'éviter toute création de couche limite sur cette électrode,
- arrêt du remplissage une fois obtenu le taux de déshydratation souhaité de la totalité du produit contenu dans la cuve,
- arrêt de l'alimentation électrique des électrodes,
- abaissement du fond avec décollement complémentaire et mise en service du convoyeur,
- sélection et récupération du produit solide obtenu.

L'invention a encore pour objet un procédé de fonctionnement discontinu d'un dispositif tel que défini ci-dessus, comprend les étapes suivantes :
- mise en place des électrodes, des portes et du fond de manière que la cuve soit étanche, les électrodes étant écartées au maximum l'une par rapport à l'autre,
- remplissage complet de la cuve,
- mise en service des moyens d'électro-osmose,
- récupération par écoulement gravitaire de l'eau retirée par électro-osmose et rapprochement asservi de l'électrode mobile afin de compenser le volume d'eau retirée, le niveau de cuve restant constant,
- décollement du produit en continu sur l'électrode concernée simultanément au déplacement de l'autre électrode,
- arrêt des moyens d'électro-osmose une fois obtenu le taux de déshydratation souhaité de la totalité du produit contenu dans la cuve,
- abaissement du fond avec décollement complémentaire et mise en service du convoyeur,
- sélection et récupération du produit solide obtenu.

La présente invention est décrite en détail ci-après selon un mode de réalisation particulier et en regard des dessins annexés sur lesquels :
- la figure 1 représente une vue en perspective schématique du dispositif selon l'invention,
- la figure 2 représente une vue de détail de l'anode,
- la figure 3 représente une vue de détail de la cathode,
- la figure 4 représente une vue de détail de la fermeture des extrémités de la cuve par des portes,
- la figure 5 représente une vue en élévation latérale partielle d'une extrémité du dispositif selon l'invention,
- la figure 6 représente une coupe transversale du dispositif selon l'invention,
- la figure 7 représente une vue en élévation latérale du chariot et du racleur,

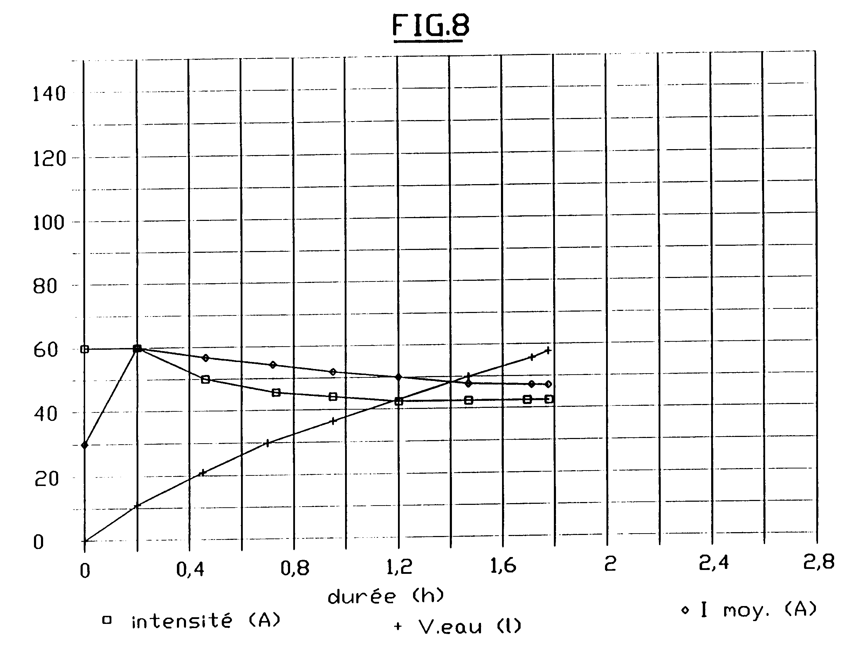

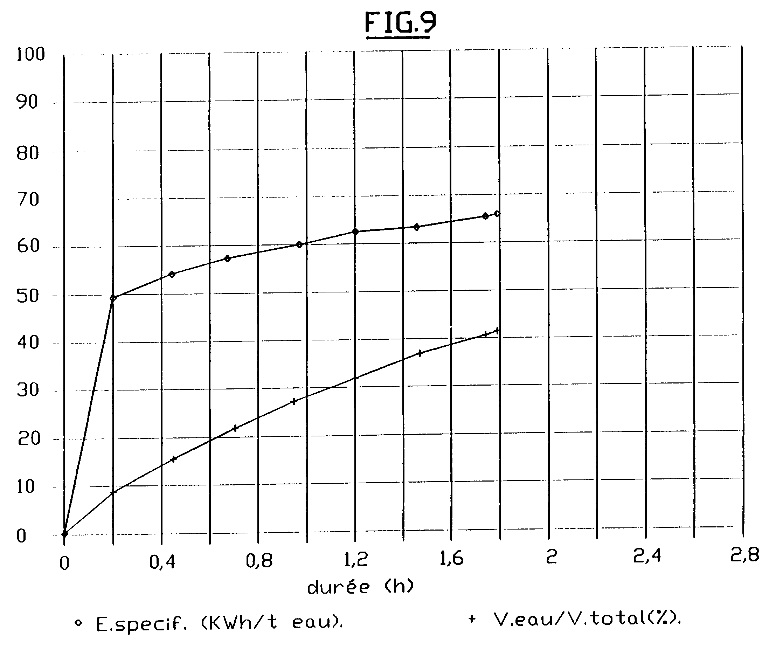

- les figures 8 et 9 représentent l'évolution des différents paramètres intensités (A), volume d'eau (l), intensité moyenne (A), énergie spécifique (kWh/t eau), volume d'eau sur volume total en pourcentage, pour une boue non brassée et des surfaces non raclées, et

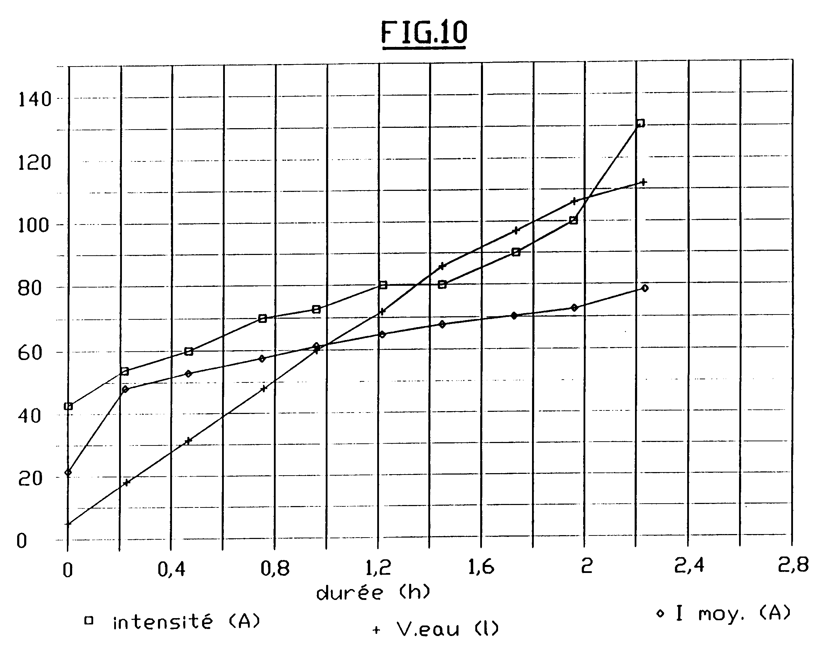

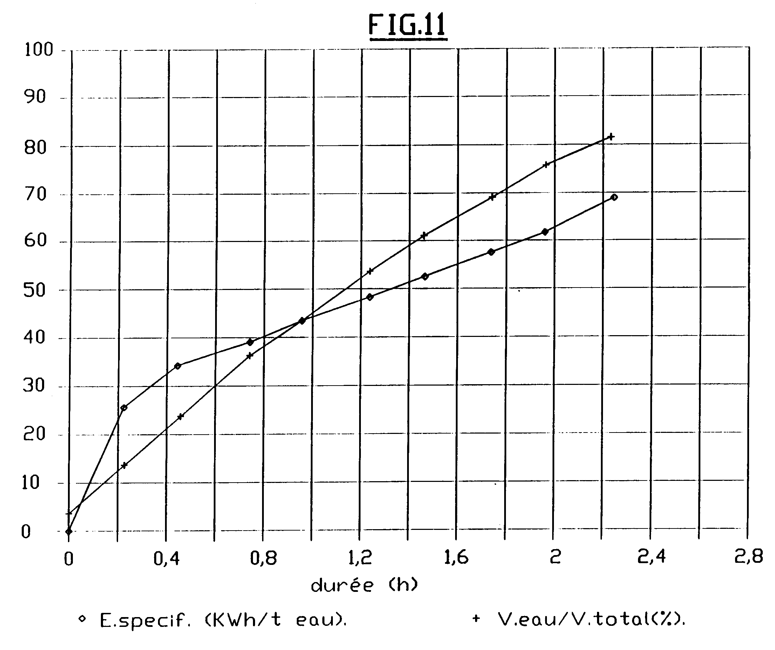

- les figures 10 et 11 représentent ces mêmes paramètres lorsqu'il est prévu un raclage des surfaces filtrantes avec mélange.

Dans le mode de réalisation représenté ci-après, la cathode est fixe et l'anode est mobile mais d'ores et déjà il est indiqué que le montage inverse avec cathode mobile et anode fixe est parfaitement réalisable et compris dans la présente invention.

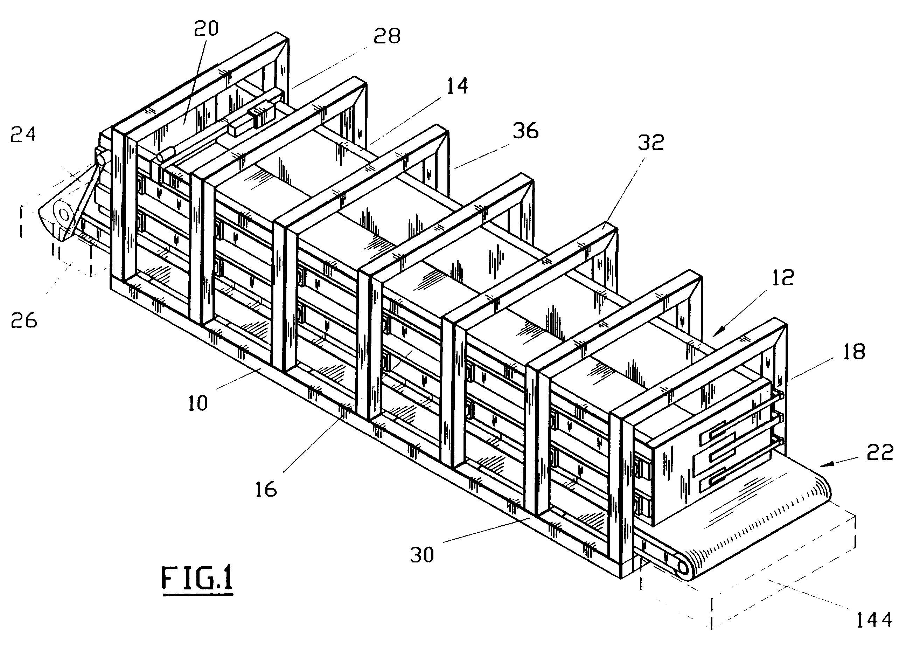

Ainsi, sur la figure 1 qui représente une vue en perspective schématique du dispositif selon l'invention, on peut distinguer un bâti 10, une cuve 12 comportant une cathode 14 et une anode 16, disposées en vis à vis, deux portes 18 et 20, ainsi qu'un fond 22.

Ce dispositif est complété par des moyens 24 sélectifs d'évacuation, des moyens 26 sélectifs de récupération ainsi que des moyens 28 de décollement des produits secs qui seront décrits en détail par la suite.

Le bâti 10 comprend un ensemble de poutres solidarisées entre elles par des moyens connus, notamment par soudage de façon à réaliser une embase 30 sur laquelle sont disposées des arches 32, régulièrement espacées et parallèles les unes aux autres et disposées transversalement par rapport à l'axe longitudinal de la cuve.

La cuve quant à elle comprend une cathode et une anode elles-mêmes réalisées à partir de plusieurs éléments juxtaposés les uns aux autres de façon que la cathode constitue un des côtés longitudinaux de la cuve tandis que les éléments de l'anode constituent l'autre côté longitudinal de cette cuve.

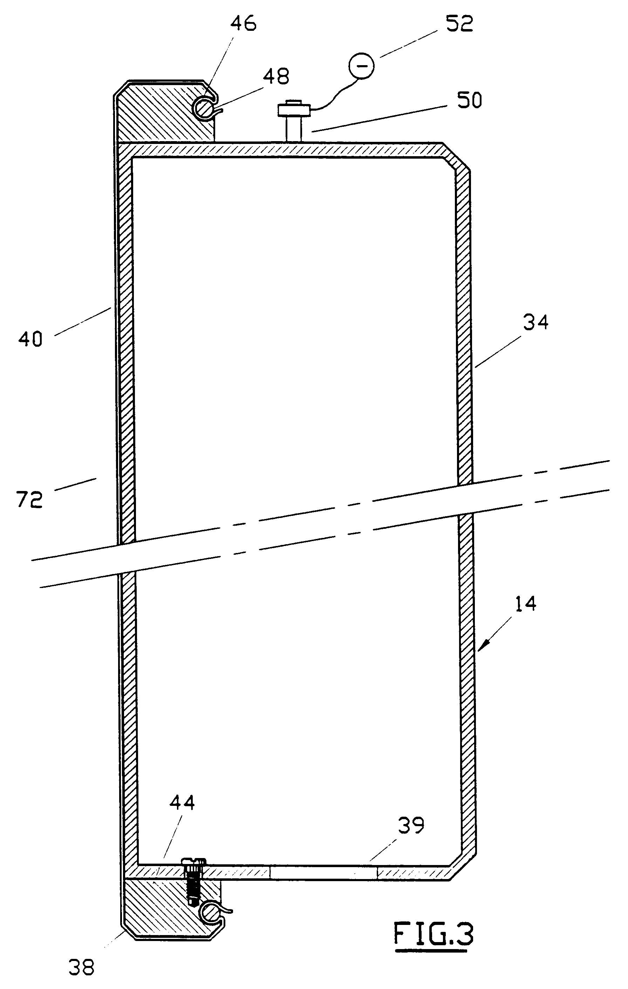

La cathode, représentée en détail sur la figure 3 comprend un support de cathode 34, fixé directement sur les jambes 36 des arches 32 du bâti 10.

Ce support de cathode, plus particulièrement réalisé en tôle pliée comprend une plaque en matériau inoxydable 38 sur la face côté humide, c'est-à-dire du côté recevant le produit à traiter. Cette plaque en matériau inoxydable 38 est recouverte d'une toile épaisse 40 d'un matériau hydrophile notamment du coton, cette toile étant elle-même recouverte par une toile filtrante 42, plus particulièrement en "nylon". Un encadrement 44 entoure le support de cathode 34 et cet encadrement 44 est muni d'une rainure 46 destinée à recevoir les bords des toiles de coton et de "nylon" qui sont bloqués dans cette rainure par un jonc 48 introduit en force.

La plaque en matériau inoxydable est avantageusement fixée sur le support de cathode par soudage.

L'ensemble du support de cathode 34 est relié par une borne 50 au pôle négatif 52 d'un générateur de courant continu de type connu et non représenté.

En partie inférieure du support de cathode, il est prévu des ouvertures 39 pour permettre un écoulement d'eau.

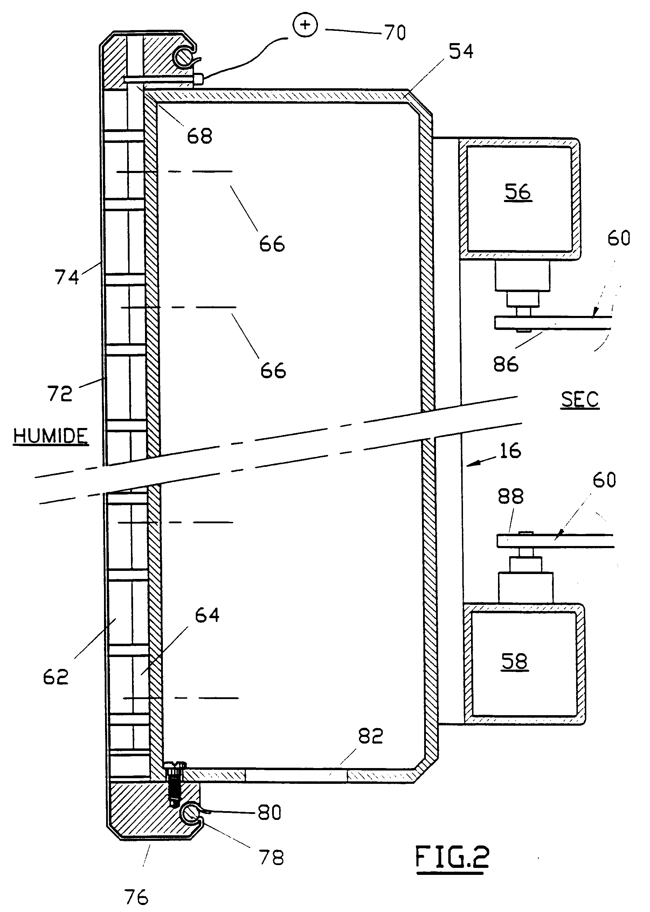

En ce qui concerne l'anode, elle est représentée en détail sur la figure 2 et elle comprend un support d'anode 54, relié à des raidisseurs supérieur 56 et inférieur 58.

Les raidisseurs 56 et 58 sont montés sur des moyens 60 de déplacement de l'anode par rapport au bâti ainsi que cela sera décrit en détail ultérieurement.

Ces raidisseurs et ces moyens de déplacement de l'anode sont disposés du côté sec de la cuve.

Du côté humide, le support d'anode comprend une plaque 62 de matériau conducteur, en l'occurrence du graphite isolé de ce support d'anode par une plaque isolante 64 en matériau du type PVC.

Des vis de fixation 66 sont symbolisées en trait mixte sur cette figure 2 et il s'agit de vis avec des rondelles isolantes de façon que le bloc de graphite soit parfaitement isolé de la structure.

Ce bloc de graphite est également muni d'une borne 68 reliée au pôle positif 70 d'un générateur de courant continu de type connu et non représenté.

De façon identique à la cathode, le bloc de graphite 62 de l'anode est recouvert d'une toile de coton 72 et d'une toile filtrante en "nylon" 74.

L'anode est également munie d'un encadrement 76 périphérique dans lequel est ménagée une rainure périphérique 78 dans laquelle les toiles de coton et de "nylon" sont fixées par un jonc 80 monté en force dans la rainure 78 de l'encadrement 76.

Par ailleurs un trou 82 permet l'évacuation de l'eau retirée par électro-osmose.

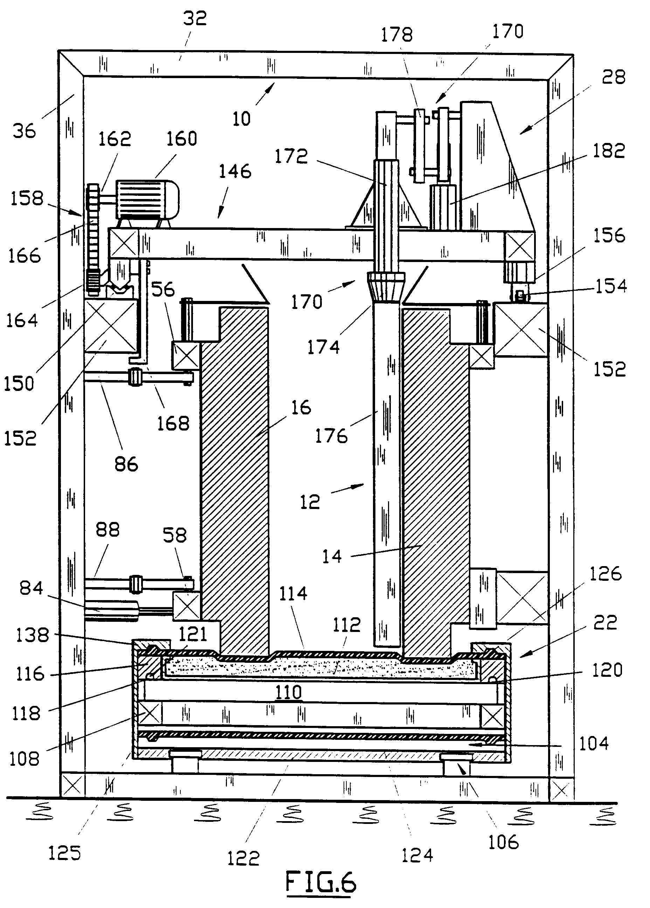

Les moyens de déplacement 60 de l'anode sont représentés sur la figure 6.

Ces moyens de déplacement 60 comprennent un vérin 84 interposé entre le support d'anode 54 et plus particulièrement la poutre inférieure 58 et les poteaux des arches 32.

Des biellettes supérieure et inférieure respectivement 86 et 88, permettent de solidariser les déplacements de tous les modules d'anode simultanément et de façon synchrone.

Ces biellettes sont également interposées entre les poteaux des arches 32 et les raidisseurs supérieur et inférieur 56 et 58.

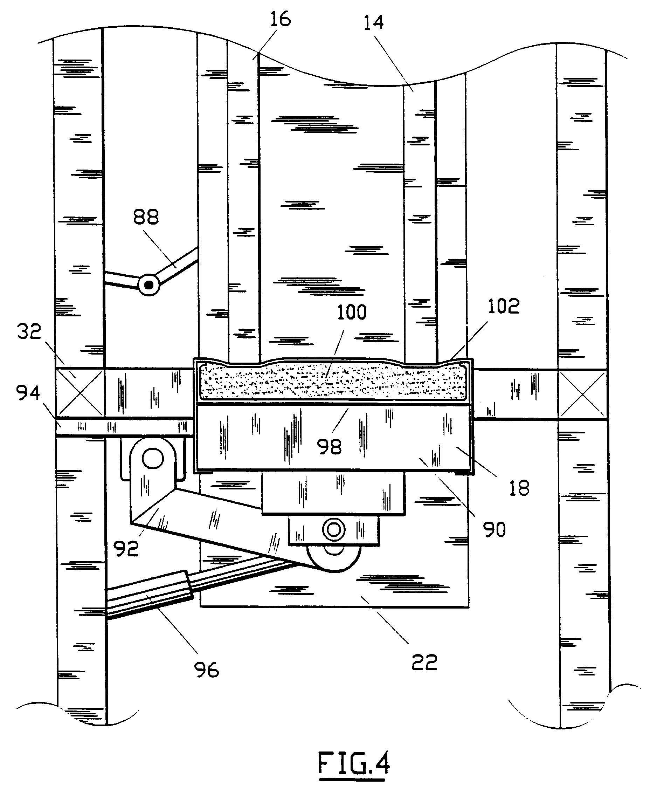

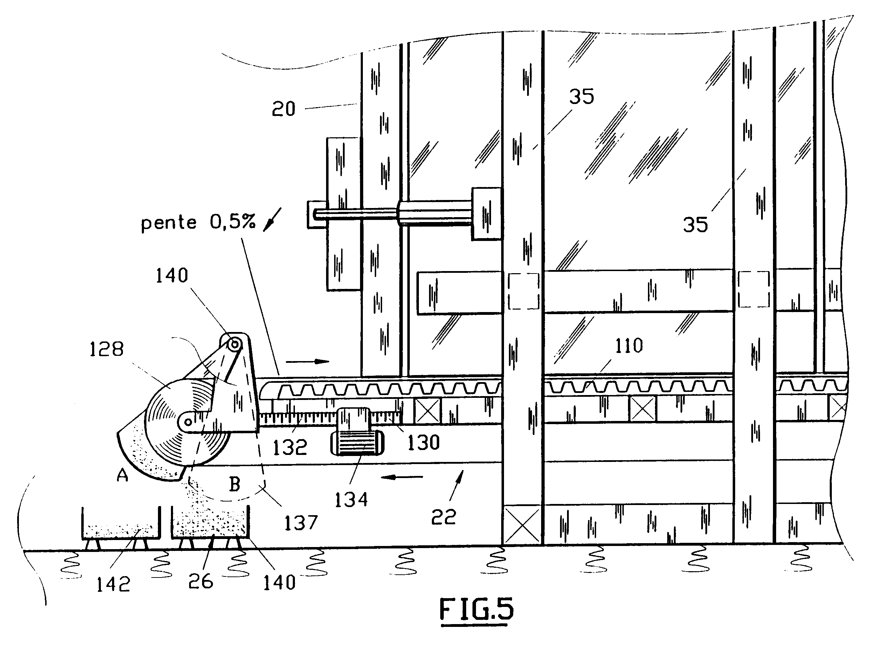

Les extrémités longitudinales de la cuve sont obturées par des portes 18 et 20 représentées également sur les figure 4 et 5.

Chaque porte comporte de façon connue une ossature 90, du type plaque de métal nervuré, articulée sur un bras 92 par rapport à une patte 94 solidaire des poteaux des arches 32 du bâti 10.

Un vérin 96 assure de façon connue les mouvements ainsi que le verrouillage de la porte.

Cette porte coopère en position fermée, telle que représentée sur la figure 4, avec la cathode 14 et avec l'anode 16 de façon étanche.

En effet, la structure rigide 90 est surmontée d'un carter 98 dans lequel est disposé un bloc de matière déformable élastiquement 100, notamment de la mousse. Cette matrice en mousse est recouverte d'un film étanche isolant 102.

L'effort de serrage de la porte sur les extrémités des anode et cathode est suffisant pour provoquer un contact étanche entre le film 102 et ces anode et cathode, cette pression exercée étant symbolisée sur la figure 4 par une déformation locale de la matrice en mousse au droit des anode et cathode.

Le fond 22 de la cuve 12 est représenté en détail sur les figures 5 et 6.

Ce fond 22 comprend un convoyeur 104 monté sur des moyens de déplacement en translation 106 par rapport au bâti 10.

Ce convoyeur 104 comprend un châssis 108 constitué de poutrelles solidaires les unes des autres et surmonté d'une tôle nervurée 110, elle-même surmontée d'un carter 112, à l'intérieur duquel est disposée une matrice 114 en matériau déformable élastiquement, notamment en mousse.

Un cadre périphérique 116 est prévu autour de ce carter 112 et il comprend une rainure périphérique 118, prévue pour recevoir un jonc 121 de fixation d'un film étanche 120 disposé sur la matrice 114.

Une barre de liaison 122 est fixée au châssis 108 et au cadre 116 par des poteaux de reprise d'efforts 125, disposés latéralement.

Une bande de transport en boucle fermée est montée à rotation, la partie supérieure de cette bande de transport glissant sur le film étanche 120, tandis que la partie inférieure passe entre le châssis 108 et les barres de liaison 122.

Cette bande de transport 124 est munie de guides latéraux 126 en saillie.

Cette bande de transport 124 est tendue, ainsi que cela est représenté en détail sur la figure 5, entre des tambours 128 munis de façon connue de moyens tendeurs 130 comportant une vis sans fin 132 entraînée par un moto-réducteur 134.

Par ailleurs, l'ensemble du fond 22 est incliné avec une pente de 0,5 % dans le sens opposé à celui du défilement, le tambour représenté sur la figure 5, qui est en amont, étant situé le plus bas.

Par ailleurs, sur la figure 6 on a représenté les poteaux 125 de reprise d'effort, situés du côté de l'anode, avec une extrémité 138 de profil complémentaire à celui des guides latéraux 126 de la bande 124.

Le dispositif selon l'invention est complété par des moyens sélectifs d'évacuation et des moyens sélectifs de récupération 26.

Ces moyens sélectifs d'évacuation comprennent de façon connue un volet 137 monté pivotant autour d'un axe 140 et pouvant prendre deux positions représentées en trait discontinu sur la figure 5, la première position A dans laquelle le volet vient au droit de l'extrémité du fond 22 et une position B dans laquelle il est escamoté.

Les moyens sélectifs de récupération comprennent deux bacs de récupération 140 et 142 correspondant respectivement au liquide souillé et au liquide clair.

Les moyens sélectifs de récupération comprennent également un tapis transporteur de matière solide 144, représenté de façon schématique sur la seule figure 1.

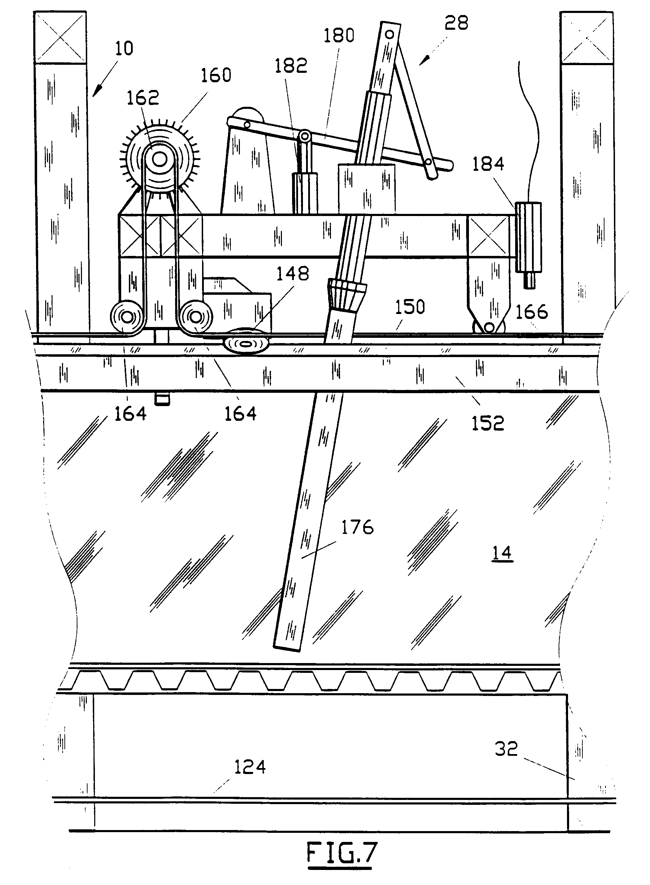

Les moyens de décollement 28 sont représentés en détail sur les figures 6 et 7.

Ces moyens de décollement comprennent un châssis 146, de type pont roulant, monté à roulement sur des galets de guidage 148, montés à rotation par rapport au châssis et prévus pour coopérer avec une cornière en V renversé 150 solidaire de poutres supports 152, solidaires du bâti 10.

Ces galets inclinés de guidage 148 sont prévus seulement du côté de l'anode, tandis que de l'autre côté, un galet 154 solidaire d'une jambe d'appui 156 permet l'équilibrage et la reprise des efforts du côté opposé correspondant à la cathode.

Le châssis 146 enjambe transversalement l'ensemble de la cuve 12.

Une motorisation 158 est prévue pour entraîner, en translation horizontale suivant l'axe longitudinal du dispositif, le châssis 146.

Cette motorisation 158 comprend un moteur proprement dit 160 muni d'une poulie crantée d'entraînement 162 qui coopère, grâce à des poulies de renvoi d'angle 164, avec une courroie crantée 166 solidaire à ses deux extrémités du bâti 10.

Sur le châssis 146 il est prévu un organe de sécurité anti-déraillement 168.

Les moyens de décollement 28 comprennent un racleur 170. Ce racleur 170 comprend un fourreau 172 muni d'un col 174 à sa partie inférieure, ce fourreau 172 étant articulé par rapport au châssis 146.

Une lame 176 est montée mobile en translation dans ce fourreau 172 et reliée à des moyens de manoeuvre 178 composés d'un ensemble de bras 180, articulés pour former un système de bielles et entraînés en déplacement par un vérin 182 de manoeuvre.

La lame 176 est légèrement inclinée par rapport à la verticale dans le plan de déplacement longitudinal.

Par ailleurs, le dispositif selon l'invention est également complété par un détecteur de niveau 184, du type laser dans le mode de réalisation représenté sur la figure 7, ce détecteur étant relié aux moyens de déplacement des anodes par un système d'asservissement de type connu et décrit notamment dans la demande de brevet EP-0 534 861 précédemment indiquée.

Il est en outre prévu des moyens d'alimentation en produits à traiter, débouchant directement dans la cuve et non représentés pour la simplification du dessin.

Le procédé de fonctionnement discontinu de ce dispositif est indiqué ci-après.

L'anode 16 est écartée de la cathode dans une position maximale de façon à définir en volume maximal de la cuve.

Dans cette position, le vérin 84 est en position rétractée.

Par ailleurs, les deux portes 18 et 20 sont également fermées et verrouillées dans cette position, si bien qu'elles assurent l'étanchéité périphérique de la cuve.

D'autre part, le fond 22 est remonté, c'est-à-dire que les moyens de relevage 106 permettent de plaquer le convoyeur 104 contre la partie inférieure des deux portes et contre la partie inférieure de l'anode et de la cathode.

Le convoyeur étant remonté avec une effort suffisamment important cela engendre une légère déformation de la partie supérieure de la bande transporteuse 124, et une légère compression de la matrice 114 en mousse, au droit des chants inférieurs des anode, cathode et des portes.

La cuve est alors étanche et peut recevoir le produit à traiter, à savoir un liquide chargé, jusqu'à ce que le détecteur de niveau 184 indique que le niveau optimum est atteint.

Il est possible de relier directement la commande d'alimentation en produit avec le détecteur de façon à automatiser cette opération de remplissage.

L'anode est alors alimentée en courant électrique, en l'occurrence dans le mode de réalisation représenté en 48 V continu, de façon à provoquer le phénomène d'électro-osmose.

Ainsi, l'eau est récupérée sur les électrodes, les particules d'eau migrant à travers les parois et s'écoulant à travers les supports d'électrodes jusque sur la bande transporteuse du convoyeur.

Cette eau s'écoule suivant la pente du convoyeur vers le tambour amont et une première partie est évacuée vers le bac 140 en mettant le volet 137 dans la position A car l'eau qui s'écoule sur le tapis est renvoyée par ce volet sous le tambour, si bien que l'eau qui s'écoule au début du processus d'électro-osmose et qui n'est éventuellement pas claire est renvoyée dans ce bac de récupération 140.

Dès que le processus d'électro-osmose génère de l'eau claire, le volet 137 est amené dans la position B de façon que l'eau s'écoule directement dans le bac de récupération 142.

Sur la cathode ou sur l'anode suivant le type de boue déshydratée, il se forme un gâteau de matière solide déshydratée. Simultanément le détecteur de niveau 184, grâce à l'asservissement prévu, pilote le déplacement de l'anode de façon que le niveau dans la cuve reste constant.

L'anode 16 glisse donc sur la bande transporteuse 124 tout en conservant l'étanchéité initiale. De même, sur les chants latéraux, l'anode vient au contact des portes qui grâce à leur matrice en mousse 100, assurent également une étanchéité.

Les moyens de décollement 28 sont également mis en action en continu durant toute la phase d'électro-osmose, et la lame 176 du racleur 170 vient nettoyer la paroi de la cathode côté humide de façon à éviter la formation d'un gâteau qui viendrait créer une couche limite ce qui aurait pour inconvénient de réduire le rendement de l'électro-osmose.

Le déplacement du chariot est assuré par le moteur 160 qui par mise en rotation du pignon 162 sur la courroie crantée 166, assure le déplacement aller et retour.

Les galets de guidage 148 permettent un positionnement et un déplacement précis du châssis 146, si bien que le déplacement du racleur 170 est également précis de façon à éviter toute dégradation de la toile filtrante en "nylon" de la cathode.

Par contre, ce racleur 170 est régulièrement recouvert de matière sèche ce qui a tendance à diminuer ses qualités de nettoyage et il convient de retirer cette accumulation de matière sèche.

Dans ce but, le vérin 182 soulève l'ensemble de bras 180 formant bielle ce qui permet de lever la lame 176 du racleur 170 à l'intérieur du fourreau 172 et le racleur est nettoyé par un col 174, par abaissement du vérin 182 le racleur est remis dans sa position initiale.

Il convient d'effectuer cette opération entre les arches de façon que le racleur ne viennent pas en butée contre la partie transversale de ces arches 32.

Le fonctionnement du dispositif est maintenu ainsi jusqu'à ce que l'anode vienne en butée contre le gâteau de matière sèche, c'est à dire lorsque le taux de déshydratation de l'ensemble du produit contenu dans la cuve est atteint.

L'alimentation en courant électrique est interrompu, le fond 22 est amené en position basse et l'anode est ramenée dans sa position d'écartement maximal.

Une partie du gâteau peut chuter sur la bande transporteuse du convoyeur qui est mis en rotation, si bien que les portions de gâteau détachées sont transférées par le convoyeur et amenées jusqu'au transporteur 144 d'évacuation.

Les moyens de décollement 28 sont à nouveau mis en service de façon à assurer un nettoyage de la cathode et une évacuation complète du gâteau de produit sec ainsi formé.

Durant ces diverses opérations, les portes 18 et 20 sont éventuellement écartées de façon à faciliter le retour de l'anode et également le nettoyage de la cathode.

Une variante du procédé de fonctionnement précédemment décrit consiste à travailler en semi-continu.

Dans ce cas, la cuve est rendue étanche par mise en place des portes, positionnement de l'anode et de la cathode et mise en position haute du fond de cuve de façon identique au procédé discontinu.

Par contre, l'anode au lieu d'être en position d'écartement maximal est au contraire rapprochée de la cathode à une distance correspondant à celle du rendement maximal pour le produit chargé à traiter.

De façon identique, le liquide chargé est introduit dans la cuve et le détecteur de niveau 184 assure le remplissage du volume adéquat.

Le système est alimenté en énergie électrique de façon que le procédé d'électro-osmose agisse sur ce liquide.

Par contre, au fur et à mesure de l'évacuation et du retrait de l'eau, l'anode reste immobile et le détecteur 184 complète, par apport complémentaire de liquide chargé, le volume correspondant à l'eau retirée.

Ainsi, le liquide chargé est traité en continu et simultanément le racleur nettoie le gâteau formé sur la cathode afin d'éliminer la couche limite éventuellement créée.

Dès que le taux de déshydratation du liquide est obtenu, l'alimentation électrique est coupée et la récupération du gâteau s'effectue de la même façon que dans le procédé discontinu.

Ce procédé semi-continu a l'avantage de travailler avec un rendement élevé et de plus l'alimentation en produit s'effectuant par la face ouverte de la cuve cela permet de maintenir humide les parois des anode et cathode car l'eau se répartit bien dans la toile de coton, ce qui facilite le passage du courant et améliore le rendement du phénomène d'électro-osmose.

Il est également possible de combiner les deux procédés, c'est-à-dire de travailler par alimentation continue de produit chargé tout en assurant un déplacement de l'anode en fonction de l'évolution du taux de déshydratation du produit et dans ce cas l'avance de l'anode sera plus lente que dans le cas du procédé discontinu.

Le dispositif et les procédés de fonctionnement selon l'invention permettent de traiter des produits chargés, notamment des boues résultant du broyage de déchets d'abattoirs, des boues contenant des minéraux très hydrophiles, mais également des matières radio-actives, car les isotopes radio-actifs de boues contaminées restent dans la matière solide, lorsque les conditions opératoires sont adaptées pour que ce soit le cas, tandis que l'eau exprimée par le phénomène d'électro-osmose ne contient pas d'isotope radio-actif.

Un tel dispositif et un tel procédé permettent donc un traitement efficace des boues contaminées, comme par exemple les boues résultant du nettoyage par lançage des plaques de générateur de vapeur.

Un tel dispositif permet donc de traiter avantageusement des produits très spécifiques en assurant leur concentration et donc la réduction de leur volume.

On remarque également que les différents matériaux employés doivent résister à des eaux très acides ou très basiques ainsi qu'à l'agression de nombreux produits abrasifs.

Il convient donc de réaliser les différents éléments destinés à être en contact avec les produits à traiter en matériaux nobles tels que de l'acier inoxydable.

Une remarque s'impose sur le fonctionnement du dispositif qui vient d'être décrit plus particulièrement dans certaines cas particuliers.

En effet, une boue de structure colloïdale qui se déshydrate par électro-osmose évolue considérablement au cours du temps.

Le champ électrique induit des migrations ioniques qui génèrent des gradients de concentration au sein de la boue et plus particulièrement du pH.

Ces conditions modifient parfois très sensiblement le potentiel zêta de la matière solide considérée.

Ainsi pour une boue à potentiel zêta négatif soumise à l'électro-osmose, l'eau sort normalement à la cathode. Il arrive que l'acidité générée à l'anode rende positif le potentiel zêta en son voisinage et permette ainsi d'extraire l'eau à l'anode. C'est pourquoi il est intéressant de prévoir une évacuation d'eau à l'anode et à la cathode.

Le mélange de la boue et le raclage des tissus filtrants recouvrant les électrodes est fondamental lorsque l'électro-osmose s'applique à une boue comportant des graisses.

L'exemple suivant en fournit la preuve sur un floc de station d'épuration d'abattoir de volailles.

L'appareil d'électro-osmose est constitué de deux électrodes verticales de 1m² distantes de 13 cm à l'instant initial et se rapprochant au fur et à mesure de l'élimination de l'eau de façon à maintenir le niveau de boue constant.

Une tension de 45 V constante est appliquée pour une même durée de fonctionnement.

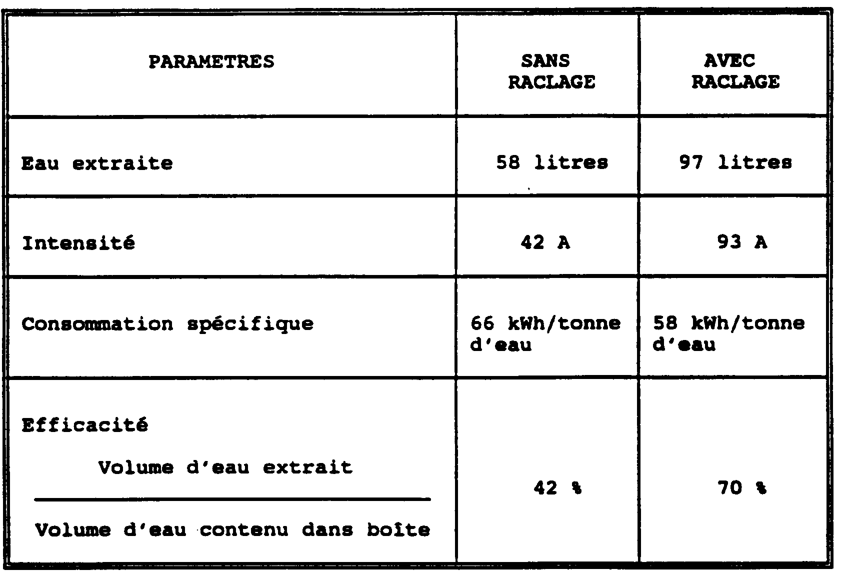

Selon une variante de l'invention, le décolmatage est effectué au moyen d'ultrasons.

Dans ce cas, le racleur est équipé de sonotrodes, si bien que les sonotrodes sont mobiles puisqu'elles se déplacent avec le racleur.

Ceci évite d'équiper la totalité de la cuve, le décolmatage s'effectuant au fur et à mesure des déplacements du racleur.

Ce racleur a également la possibilité d'agir simultanément avec la sonotrode ou indépendamment lors d'un passage ultérieur pour finaliser le nettoyage.

Dans l'ensemble de la demande, il est prévu une anode mobile et une cathode fixe mais il est rappelé qu'il est possible de réaliser un montage inverse avec anode fixe et une cathode mobile sans que cela modifie la portée de la présente demande.

## Revendications

1. Dispositif de déshydratation de produits chargés par électro-osmose, du type comprenant une cuve (12) délimitée par un fond (22), deux parois longitudinales (14,16) et deux parois d'extrémité (18,20), deux électrodes une cathode (14) et une anode (16) en vis à vis délimitant les deux parois longitudinales de la cuve, des moyens pour conserver une hauteur constante de liquide dans la cuve, et des moyens (106) de déplacement en translation sensiblement verticale du fond (22) par rapport aux électrodes (14,16) entre une position haute dans laquelle le fond coopère en contact étanche avec les électrodes (14,16) et une position basse dans laquelle le fond est écarté de ces électrodes, dans lequel le fond (22) comporte un convoyeur (104) muni à ses extrémités de moyens (26) sélectifs de récupération des produits obtenus, les parois d'extrémité sont délimitées par des portes étanches (18,20) et le dispositif comprend de plus des moyens (28) de décollement en continu des produits secs accumulés sur les électrodes.

2. Dispositif selon la revendication 1, caractérisé en ce que le convoyeur (104) comporte une bande (124) de transport inclinée avec une ligne de pente telle que le point bas est en amont du sens de défilement.

3. Dispositif selon la revendication 1 ou 2, caractérisé en ce que le convoyeur (104) comporte une bande (124) de transport supportée par un châssis statique comportant un film (102) étanche tendu sur une matrice (100) en matériau déformable élastiquement de façon à assurer un plaquage étanche de ladite bande de transport contre les électrodes (14,16) lorsque le fond (22) est en position haute.

4. Dispositif selon la revendication 3, caractérisé en ce que la bande (124) de transport en position haute du fond est un peu plus haute que le chant inférieur des électrodes (14,16) de façon à assurer un contact glissant étanche entre cette bande de transport et les électrodes.

5. Dispositif selon la revendication 3 ou 4, caractérisé en ce que la bande (124) de transport comprend deux guides (126) latéraux en saillie de façon à assurer un maintien en position de la bande dans des rails de guidage ménagés sur le châssis ainsi qu'un bon écoulement des liquides.

6. Dispositif selon l'une quelconque des revendications 1 à 5, caractérisé en ce qu'il comprend des moyens sélectifs d'évacuation et de récupération (26) des produits séparés par électro-osmose.

7. Dispositif selon l'une quelconque des revendications précédentes, caractérisé en ce que les moyens (28) de décollement en continu comprennent un racleur (170) monté sur un chariot (146) mobile en translation horizontale parallèlement à l'électrode concernée.

8. Dispositif selon la revendication 7, caractérisé en ce que le racleur (170) est mobile en translation verticale par rapport au chariot dans un fourreau (172) afin d'assurer son auto-nettoyage.

9. Dispositif selon l'une quelconque des revendications 1 à 8, caractérisé en ce que les moyens pour conserver une hauteur constante de liquide comprennent des moyens de remplissage de la cuve au fur et à mesure que l'eau s'écoule de cette cuve.

10. Dispositif selon l'une quelconque des revendications 1 à 8, caractérisé en ce que les moyens pour conserver une hauteur constante de liquide comprennent des moyens (60) d'asservissement des déplacements d'une des électrodes (14,16) par rapport à l'autre en fonction du niveau dans la cuve.

11. Procédé de fonctionnement semi-continu du dispositif selon la revendication 9, caractérisé en ce qu'il comprend les étapes suivantes :
- mise en place des électrodes (14,16), des portes (18,20) et du fond (22) de manière que la cuve (12) soit étanche, l'écartement anode-cathode étant réglé à une valeur correspondant au rendement maximal de séparation par électro-osmose pour le produit chargé à traiter,
- remplissage de la cuve (12) avec du produit à traiter,
- mise sous tension des électrodes (14,16),
- récupération par écoulement gravitaire de l'eau retirée par électro-osmose et maintien du niveau de produit à traiter dans la cuve par remplissage en continu de cette cuve,
- décollement en continu du produit sur l'électrode concernée afin d'éviter toute création de couche limite sur cette électrode,
- arrêt du remplissage une fois obtenu le taux de déshydratation souhaité de la totalité du produit contenu dans la cuve,
- arrêt de l'alimentation électrique des électrodes (14,16),
- abaissement du fond avec décollement complémentaire et mise en service du convoyeur,
- sélection et récupération du produit solide obtenu.

12. Procédé de fonctionnement discontinu du dispositif selon la revendication 10, caractérisé en ce qu'il comprend les étapes suivantes :
- mise en place des électrodes (14,16), des portes (18,20) et du fond (22) de manière que la cuve (12) soit étanche, les électrodes étant écartées au maximum l'une par rapport à l'autre,
- remplissage complet de la cuve,
- mise en service des moyens d'électro-osmose,
- récupération par écoulement gravitaire de l'eau retirée par électro-osmose et rapprochement asservi de l'électrode mobile afin de compenser le volume d'eau retirée, le niveau de cuve restant constant,
- décollement du produit en continu sur l'électrode concernée simultanément au déplacement de l'autre électrode,
- arrêt des moyens d'électro-osmose une fois obtenu le taux de déshydratation souhaité de la totalité du produit contenu dans la cuve,
- abaissement du fond avec décollement complémentaire et mise en service du convoyeur,
- sélection et récupération du produit solide obtenu.

## Claims

1. A device for dehydrating charged products by electro-osmosis of the type comprising a tank (12), delimited by a bottom (22), two longitudinal walls (14,16) and two end walls (18, 20); two opposed electrodes, a cathode (14) and an anode (16) delimiting the two longitudinal walls of the tank; means for maintaining a constant level of liquid in the tank; and means (106) for a substantially vertical displacement of the bottom (22) relative to the electrodes (14,16) between a high position, wherein the bottom cooperates in a leakproof contact with the electrodes (14, 16), and a low position wherein the bottom is remote from these electrodes; wherein the bottom (22) comprises a conveyor (104) provided at its ends with selective recovery means of the products obtained, the end walls are delimited by leakproof doors (18, 20), and the device comprises, moreover, means (28) for the continuous detachment of dry products accumulated on the electrodes.

2. A device according to claim 1, characterized in that the conveyor (104) comprises an inclined conveyor belt (124) with a line of inclination such that the low point is upstream in the direction of movement.

3. A device according to claim 1 or 2, characterized in that the conveyor (104) has a conveyor belt (124) supported by a static frame including a leakproof film (102) stretched over a bed (100) of an elastically deformable material so as to ensure a leakproof application of the said conveyor belt against the electrodes (14, 16) when the bottom (22) is in its high position.

4. A device according to claim 3, characterized in that when the bottom is in its high position, the conveyor belt (124) is a little higher than the lower edge of the electrodes (14, 16) so as to ensure a leakproof sliding contact between this conveyor belt and the electrodes.

5. A device according to claim 3 or 4, characterized in that the conveyor belt (124) comprises two projecting lateral guides (126) so as to ensure that the belt is kept in position in guide rails arranged on the frame, as well as a proper flow of the liquids.

6. A device according to any one of claims 1 to 5, characterized in that it comprises selective means (26) for the evacuation and recovery of the products separated by electro-osmosis.

7. A device according to any one of the preceding claims, characterized in that the means (28) for the continuous detachment comprise a scraper (170) mounted on a carriage (146) movable in horizontal translation parallel to the electrode concerned.

8. A device according to claim 7, characterized in that the scraper (170) is movable in vertical translation relative to the carriage in a sleeve (172) so as to ensure its self-cleaning.

9. A device according to any one of claims 1 to 8, characterized in that the means for maintaining a constant level of the liquid comprise means for progressively filling the tank as the water runs out of this tank.

10. A device according to any one of claims 1 to 8, characterized in that the means for maintaining a constant level of the liquid comprise means (60) for the automatic control of the displacements of one of the electrodes (14, 16) relative to the other, according to the level in the tank.

11. A method for the semi-continuous operation of the device according to claim 9, characterized in that it comprises the following steps:
- positioning the electrodes (14, 16), the doors (18, 20) and the bottom (22) in such a way that the tank (12) is leakproof, the anode-cathode interspacing being adjusted to a value corresponding to the maximum separating output by electro-osmosis for the charged product to be processed,
- filling the tank (12) with the product to be processed,
- energizing the electrodes (14, 16),
- recovery by gravity flow of the water withdrawn by electro-osmosis, and maintaining the level of the product to be processed in the tank by the continuous refilling of this tank,
- a continuous detachment of the product on the electrode concerned so as to avoid any formation of a limiting layer on this electrode,
- stopping the filling once the desired dehydration rate of the whole of the product contained in the tank has been obtained,
- stopping the power supply for the electrodes (14, 16),
- lowering the bottom, with a complementary detachment, and operating the conveyor,
- selection and recovery of the solid product obtained.

12. A method for the discontinuous operation of the device according to claim 10, characterized in that it comprises the following steps:
- positioning the electrodes (14, 16), the doors (18, 20) and the bottom (22) so that the tank (12) is leakproof, the electrodes, being at their maximum interspacing with respect to each other,
- completely filling the tank,
- operating the electro-osmosis means,
- recovery by gravity flow of the water withdrawn by electro-osmosis, and imparting a controlled approaching movement to the movable electrode so as to compensate the volume of the withdrawn water, the tank level remaining constant,
- continuously detaching the product on the electrode concerned, simultaneously with the displacement of the other electrode,
- stopping the electro-osmosis means once the desired rate of dehydration of the whole of the product contained in the tank has been obtained,
- lowering the bottom with a complementary detachment, and operating the conveyor,
- selection and recovery of the solid product obtained.

## Patentansprüche

1. Vorrichtung zur Dehydratisierung von geladenen Produkten durch Elektroosmose, von der Art mit einer Wanne (12), die durch einen Boden (22), zwei Längswände (14, 16) und zwei Endwände (18, 20) abgegrenzt wird, wobei zwei einander gegenüberliegende Elektroden, eine Kathode (14) und eine Anode (16), die zwei Längswände der Wanne abgrenzen, mit Mitteln, um in der Wanne einen konstanten Flüssigkeitsspiegel zu halten, und mit Mitteln (106) zur im wesentlichen vertikalen Parallelverschiebung des Bodens (22) in bezug auf die Elektroden (14, 16) zwischen einer hohen Position, in welcher der Boden in dichtem Kontakt mit den Elektroden (14, 16) zusammenwirkt, und einer tiefen Position, in welcher der Boden von diesen Elektroden beabstandet ist, wobei der Boden (22) eine Fördereinrichtung (104) aufweist, die an ihren Enden mit selektiven Mitteln (26) zum Sammeln der gewonnenen Produkte versehen ist, die Endwände durch dichte Türen (18, 20) abgegrenzt sind und die Vorrichtung außerdem Mittel (28) zur kontinuierlichen Ablösung der auf den Elektroden akkumulierten trockenen Produkte umfaßt.

2. Vorrichtung nach Anspruch 1, dadurch gekennzeichnet, daß die Fördereinrichtung (104) ein Transportband (124) aufweist, das mit einer derartigen Fallinie geneigt ist, daß sich der tiefe Punkt stromaufwärts der Durchlaufrichtung befindet.

3. Vorrichtung nach Anspruch 1 oder 2, dadurch gekennzeichnet, daß die Fördereinrichtung (104) ein Transportband (124) umfaßt, das von einer statischen Konstruktion abgestützt wird, welche einen dichten Film (102) aufweist, der über eine Matrix (100) aus elastisch verformbarem Material gespannt ist, so daß eine dichte Pressung des Transportbandes gegen die Elektroden (14, 16) gewährleistet ist, wenn sich der Boden (22) in der hohen Position befindet.

4. Vorrichtung nach Anspruch 3, dadurch gekennzeichnet, daß das Transportband (124) in der hohen Position des Bodens etwas höher ist als die Unterkante der Elektroden (14, 16), so daß ein dichter Gleitkontakt zwischen diesem Transportband und den Elektroden gewährleistet ist.

5. Vorrichtung noch Anspruch 3 oder 4, dadurch gekennzeichnet, daß das Transportband (124) zwei vorspringende seitliche Führungen (126) aufweist, so daß ein Halten des Bandes in seiner Position in den auf der Konstruktion vorgesehenen Führungsschienen sowie ein guter Ablauf der Flüssigkeiten gewährleistet ist.

6. Vorrichtung nach irgendeinem der Ansprüche 1 bis 5, dadurch gekennzeichnet, daß sie selektive Mittel zur Abfuhr und zum Sammeln (26) der durch Elektroosmose getrennten Produkte umfaßt.

7. Vorrichtung nach irgendeinem der vorhergehenden Ansprüche, dadurch gekennzeichnet, daß die Mittel (28) zur kontinuierlichen Ablösung einen Abstreicher (170) umfassen, der auf einem Wagen (146) montiert ist, der parallel zur betreffenden Elektrode in einer horizontalen Translationsbewegung verschiebbar ist.

8. Vorrichtung nach Anspruch 7, dadurch gekennzeichnet, daß der Abstreifer (170) in einer vertikalen Translationsbewegung in bezug auf den Wagen in einer Hülse (172) verschiebbar ist, um seine Selbztreinigung zu gewährleisten.

9. Vorrichtung nach irgendeinem der Ansprüche 1 bis 8, dadurch gekennzeichnet, daß die Mittel zum Halten eines konstanten Flüssigkeitsspiegels Mittel zum Auffüllen der Wanne je nach dem Ablauf von Wasser aus dieser Wanne umfassen.

10. Vorrichtung nach irgendeinem der Ansprüche 1 bis 8, dadurch gekennzeichnet, daß die Mittel zum Halten eines konstanten Flüssigkeitsspiegels Mittel (60) zur Steuerung der Verschiebungen einer der Elektroden (14, 16) in bezug auf die andere in Abhängigkeit von dem Pegel in dar Wanne umfassen.

11. Verfahren zum halbkontinuierlichen Betreiben der Vorrichtung nach Anspruch 9, dadurch gekennzeichnet, daß es die folgenden Schritte umfaßt:
- das Anordnen der Elektroden (14, 16), der Türen (18, 20) und des Bodens (22) in einer solchen Stellung, daß die Wanne (12) dicht ist, wobei der Anoden-Kathoden-Abstand auf einen Wert eingestellt wird, welcher der maximalen Trennleistung durch Elektroosmose für das zu behandelnde geladene Produkt entspricht,
- das Füllen der Wanne (12) mit dem zu behandelnden Produkt,
- das Unterspannungsetzen der Elektroden (14, 16),
- das Sammeln des durch Elektroosmose entzogenen Wassers durch schwerkraftsbedingten Ablauf und das Halten des Pegels des zu behandelnden Produkte in dar Wanne durch kontinuierlichen Auffüllen dieser Wanne,
- das kontinuierliche Ablösen des Produkts auf der betreffenden Elektrode, um jegliche Entstehung einer Grenzschicht auf dieser Elektrode zu verhindern,
- das Abbrechen des Auffüllvorgangs, sobald der gewünschte Dehydratisierungsgrad der Gesamtheit des in der Wanne enthaltenen Produkts erreicht ist,
- das Unterbrechen der elektrischen Versorgung der Elektroden (14, 16),
- das Absenken des Bodens mit zusätzlicher Ablösung und Inbetriebnahme der Transporteinrichtung,
- die Selektion und das Sammeln des gewonnenen festen Produkts.

12. Verfahren zum diskontinuierlichen Betreiben der Vorrichtung nach Anspruch 10, dadurch gekennzeichnet, daß es die folgenden Schritte umfaßt:
- das Anordnen der Elektroden (14, 16), der Türen (18, 20) und des Bodens (22) in einer solchen Stellung, daß die Wanne (12) dicht ist, wobei sich die Elektroden in einem maximalen Abstand voneinander befinden,
- das vollständige Füllen der Wanne,
- die Inbetriebnahme der Elektroosmosemittel,
- das Sammeln des durch Elektroosmose entzogenen Wassers durch schwerkraftsbedingten Ablauf und die gesteuerte Annäherung der beweglichen Elektrode, um das Volumen des entzogenen Wassers auszugleichen, wobei der Wannenpegel konstant bleibt,
- das kontinuierliche Ablösen des Produkts auf der betreffenden Elektrode gleichzeitig mit der Verschiebung der anderen Elektrode,
- das Abschalten der Elektroosmosemittel, sobald der gewünschte Dehydratisierungsgrad der Gesamtheit des in der Wanne enthaltenden Produkts erreicht ist,
- das Absenken des Bodens mit zusätzlicher Ablösung und Inbetriebnahme der Transporteinrichtung,
- die Selektion und das Sammeln des gewonnenen festen Produkts.
